# EUROPÄISCHE PATENTSCHRIFT

(11) **EP 1 582 732 B1**
(45) Veröffentlichungstag und Bekanntmachung des Hinweises auf die Patenterteilung: **28.12.2005**
(21) Anmeldenummer: 04007531.9
(22) Anmeldetag: 29.03.2004
(51) Int. Cl.: F02M 31/125, F02M 37/00, F02M 31/10

(54) **Entnahmeeinheit mit Heizeinrichtung und Wärmetauscherfortsatz, für einen Tank mit ausfällendem und/oder gefrierendem Fluid**
Dispenser unit with heating device and heat exchanger support for a tank with decomposing and/or freezing fluid
Distributeur avec dispositif de chauffage et support d'échangeur de chaleur pour un réservoir avec fluide servant à décomposer et/ou congeler

(43) Veröffentlichungstag der Anmeldung: 05.10.2005
(73) Patentinhaber: DBK David + Baader GmbH, 76870 Kandel (DE)
(72) Erfinder: Gschwind, Thomas, 67098 Bad Dürkheim (DE)
(74) Vertreter: Grünecker, Kinkeldey, Stockmair & Schwanhäusser Anwaltssozietät

## Beschreibung

Die Erfindung betrifft eine Entnahmeeinheit zur Entnahme eines Fluids aus einem Tank, die durch eine Montageöffnung in den Tank insbesondere für ein ausfällendes und/oder gefrierendes Fluid einteilig einsetzbar ausgestaltet ist, mit einem Tauchkörper, der mit einer Entnahmeleitung und mit einem Wärmetauscher versehen ist, und mit einem Wärmetauscherfortsatz, der sich im eingesetzten Zustand der Entnahmeeinheit vom Tauchkörper weg in das Tankinnere erstreckt

Derartige Entnameeinheiten werden beispielsweise bei Kraftfahrzeugen mit Verbrennungskraftmotoren, insbesondere Dieselmotoren, eingesetzt, die mit Zusatztanks für eine wässrige Harnstofflösung versehen sind. Die wässrige Harnstofflösung wird bei SINOX-Abgasreinigungssystemen als Reduktionsmittel dem Abgas zugegeben. Eine in die Entnahmeeinheit integrierte Heizung verhindert herkömmlicherweise, dass die wässrige Harnstofflösung gefrieren und die Entnahmeleitung zusetzen kann. Die Entnahmeeinheiten werden üblicherweise durch die Montageeinheit in einen ansonsten rundum geschlossenen Tank eingesetzt. Der Tauchkörper taucht mit dem rohrförmigen Wärmetauscher und der ebenfalls rohrförmigen Entnahmeleitung in das Fluid im Tank ein.

Ein Heizsystem, das in einen Treibstofftank, insbesondere in einen Dieseltank, eingesetzt wird, um das Ausfällen bei niedrigen Temperaturen zu vermeiden, ist beispielsweise aus der US-A-4,656,979 bekannt. Das dort beschriebene Heizsystem weist eine Treibstoffauslassleitung, die sich nach unten bis nahe dem Tankboden erstreckt, und ein Leitungssystem auf, durch das beispielsweise die Kühlflüssigkeit eines Verbrennungskraftmotors geleitet wird, welche dann den Treibstofftank aufheizen. Das Leitungssystem zwei sich in Richtung des Tankbodens erstreckende Leitungen auf, an die sich ein Leitungsabschnitt rechtwinkelig anschließt. Dieser Abschnitt erstreckt sich parallel zum Boden des Tankes.

Ein weiteres Heizsystem zum Beheizen von Tanks ist aus der US-A-5,105,063 bekannt. Um eine im Wesentlichen gleichförmige Temperaturverteilung im Tank sicherzustellen und lokale Hitzepunkte zu vermeiden, welche zu einer Verkokelung des Fluids führen können, sind zwei Tanks vorgesehen, die über beheizte Leitung mit einer Heizung mit einander verbunden sind. Zusätzlich ist in dem einen Tank ein Tauchheizer eingebaut, der sich horizontal durch den Tank erstreckt.

Der Nachteil der herkömmlicherweise verwendeten Entnahmeeinheiten liegt darin, dass der gesamte Tank nur nach relativ langer Heizdauer vollständig aufgetaut werden kann. Meist ist lediglich der Raum unmittelbar um die Entnahmeeinheit herum aufgetaut, während große Bereiche des Tankinhaltes als Eisblöcke gefroren bleiben. Diese gefrorenen Bereiche stellen eine Gefahr dar, da sie beim Beschleunigen und Abbremsen des Fahrzeugs gegen den Tank und/oder die Entnahmeeinheit prallen und diese beschädigen können.

Folglich liegt der Erfindung die Aufgabe zugrunde, eine einfach in die Montageöffnung einzusetzende und zu montierende Entnahmeeinheit zu schaffen, welche zuverlässig in der Lage ist, in kurzer Zeit möglichst den gesamten Tankinhalt aufzutauen, und die Bildung von gefährlichen Eisblöcken vermeidet.

Diese Aufgabe wird erfindungsgemäß für eine Entnahmeeinheit der eingangs genannten Art dadurch gelöst, dass der Wärmetauscherfortsatz auslenkbar ausgestaltet ist.

Diese Lösung ist konstruktiv einfach. Die erfindungsgemäß ausgestaltete Entnahmeeinheit ist aufgrund der flexiblen bzw. auslenkbaren Ausgestaltung des Wärmetauscherfortsatzes einfach durch die Montageöffnung in den Tank einzusetzen. Gleichzeitig ragt der Wärmetauscherfortsatz im eingesetzten Zustand vom Tauchkörper weg in das Tankinnere und führt somit auch entlegenen Bereichen im Tank Wärme zu. Somit kann auch an von der Entnahmeeinheit weit entfernten Stellen des Tankinneren ein Gefrieren des Tankinhalts verhindert bzw. der gefrorene Tankinhalt aufgetaut werden; die Gefahr wird erheblich verringert, dass beim Auftauen Eisblöcke verbleiben. Durch die Auslenkbarkeit bewegt sich der Wärmetauscherfortsatz stets mit der Bewegungsänderung des Fahrzeugs leicht durch das Tankinnere, was die Durchmischung und gleichmäßige Temperierung des Tankinneren fördert.

Die erfindungsgemäße Ausgestaltung der Entnahmeeinheit kann durch weitere, jeweils für sich unabhängig vorteilhafte Ausgestaltungen weiter verbessert werden. Die einzelnen Ausgestaltungen sind dabei jeweils beliebig miteinander kombinierbar.

So kann in einer vorteilhaften Ausgestaltung der Wärmetauscherfortsatz elastisch, gegen eine Rückstellkraft, auslenkbar ausgestaltet sein. Durch diese Maßnahme kann der Wärmetauscherfortsatz unter Wirkung der elastischen Rückstellkraft selbsttätig beispielsweise seine vom Tauchkörper sich weg erstreckende Stellung einnehmen, so dass keine zusätzlichen Werkzeuge notwendig sind, um den Wärmetauscherfortsatz nach dem Einsetzen des Tauchkörpers im Tankinneren auszurichten. Alternativ kann die elastische Rückstellkraft den Wärmetauscherfortsatz auch in eine Montagestellung überführen, in der er durch die Montageöffnung passt. In diesem Fall ist es sinnvoll, wenn zusätzliche Maßnahmen ergriffen werden, um den Wärmetauscherfortsatz dann im Betrieb selbsttätig vom Tauchkörper weg in das Tankinnere zu richten. Dies kann beispielsweise dadurch erreicht werden, dass ein Heizfluid unter Druck durch den Wärmetauscherfortsatz zirkuliert und diesen aufbläht.

Auf konstruktiv einfachem Wege kann eine elastische Auslenkbarkeit des Wärmetauscherfortsatzes erreicht werden, wenn der Wärmetauscherfortsatz eine elastische Wärmetauscherwendel, -spirale oder -mäander aufweist, die von einem Heizdraht oder Heizschlauch gebildet ist. Neben der elastischen Auslenkbarkeit erlauben diese Formen eine gleichmäßig und großflächig verteilte Heizleistung im Inneren des Tanks.

Die Montage der Entnahmeeinheit kann gemäß einer weiteren Ausgestaltung dadurch vereinfacht werden, dass in der Montageposition der Wärmetauscherfortsatz in einer Ebene im Wesentlichen quer zur Einführrichtung einen Querschnitt mit einer Außenkontur aufweist, die in die Innenkontur der Tanköffnung einschreibbar ist. Dadurch lässt sich die Entnahmeeinheit trotz des Wärmetauscherfortsatzes durch eine einfache Bewegung in den Tank einsetzen.

Eine Heiz- und Kühlwirkung des Wärmetauschers kann insbesondere durch ein Wärmetauscherfluid bewirkt werden, das durch Wärmetauscherkanäle des Wärmetauschers strömt und eine vom Tankinhalt unterschiedliche Temperatur aufweist, um die Temperatur des Tankinhalts in Richtung der Temperatur des Wärmetauscherfluids zu ändern. Insbesondere kann als Wärmetauscherfluid die Kühlflüssigkeit der Verbrennungskraftmaschine verwendet werden, deren Abgase gereinigt werden sollen. Auf diese Weise wird die Abwärme der Verbrennungskraftmaschine umweltfreundlich verwertet.

In einer weiteren vorteilhaften Ausgestaltung kann der Wärmetauscherfortsatz an die Wärmetauscherkanäle fluidleitend angeschlossen sein, so dass die Heiz- und/oder Kühlwirkung des Wärmetauscherfortsatzes ebenfalls auf dem Wärmetauscherfluid beruht. Hierzu kann der Wärmetauscherfortsatz insbesondere einen im Betrieb vom Wärmetauscherfluid durchströmten Schlauch aufweisen, der in einer Weiterbildung zur Erzielung einer elastischen Auslenkbarkeit schrauben- oder spiralförmig oder auch mäanderförmig gewickelt sein kann. Durch den Wärmetauscherfortsatz kann so der Kreislauf des Wärmetauscherfluids geschlossen sein.

Um bei während des Betriebs des Verbrennungskraftmotors sinkendenTemperaturen ein Gefrieren oder Ausfällen des Tankinhalts zu vermeiden, kann eine Temperatureinstelleinrichtung vorgesehen sein, durch welche bei einem Unterschreiten einer Grenztemperatur die Wärmetauschereinrichtung im Wesentlichen automatisch als Heizeinrichtung betätigbar ist. Eine solche Grenztemperatur kann beispielsweise eine Temperatur im Bereich des Gefrierpunktes der im Tank enthaltenen Flüssigkeit sein. Allerdings kann bei Fluiden, die bei niedrigen Temperaturen ausfällen, als Grenztemperatur auch eine Temperatur im Bereich der Ausfälltemperatur als Grenztemperatur verwendet werden.

Alternativ oder zusätzlich kann ferner eine Temperatureinstelleinrichtung vorgesehen sein, durch welche bei einem Überschreiten einer Grenztemperatur die Wärmetauschereinrichtung im Wesentlichen automatisch als Kühleinrichtung betätigbar ist. So zersetzt sich beispielsweise eine wässrige Harnstofflösung bei Temperaturen oberhalb von 60°C. Deswegen kann bei einem Überschreiten der Zersetzungstemperatur als Grenztemperatur die Wärmetauschereinrichtung im Wesentlichen abgeschaltet oder als Kühleinrichtung betrieben werden, so dass sich im Betrieb der Harnstoff nicht zersetzen kann. Als Grenztemperatur kann natürlich bei anderen Fluiden, wie beispielsweise Wasser, auch ein Siedepunkt verwendet werden.

Das Umschalten zwischen Heiz- und Kühlbetrieb kann auch durch eine einzige Temperatureinstelleinrichtung wahrgenommen werden. Die Temperatureinstelleinrichtung kann als elektrischer Bauteil, gegebenenfalls mitsamt einem Temperaturfühler, durch den eine vorzugsweise repräsentative Temperatur des Fluids im Tankinneren messbar ist, in die Entnahmeeinheit integriert sein.

Die Temperatureinstellungseinrichtung kann Teil einer elektronischen Steuereinheit sein, die in die Entnahmeeinheit integriert ist. In die Steuereinheit können weitere Module integriert sein, wie beispielsweise ein Pegelmesser, um den Füllstand des Tanks zu überwachen, eine Dosiereinheit, durch die die Entnahmemenge pro Zeiteinheit des Fluids aus dem Tank überwacht und eingestellt wird, und eine Steuerung für eine elektrische Zusatzheizung.

In einer weiteren, für sich betrachtet selbständig erfinderischen Ausgestaltung der Erfindung kann der Tauchkörper aus einem Strangpressprofil gebildet sein, was die Herstellkosten erheblich verringert. Um gute Wärmetauscheigenschaften zu erzielen, kann der Tauchkörper insbesondere aus einem stark wärmeleitenden, vorzugsweise leicht umformbaren Material wie Aluminium stranggepresst sein. Bei Verwendung der Entnahmeeinheit in koronaren Medien, wie einer wässrigen Harnstoffleitung, kann das Strangpressprofil auch aus einem korrosionsbeständigen Umformwerkstoff wie Edelstahl gefertigt sein.

Durch das Vorsehen von Profilkanälen, die sich längs durch das Strangpressprofil erstrecken, kann gemäß einer Weiterbildung das Gewicht des Tauchkörpers verringert werden, was insbesondere bei Fahrzeugen aufgrund der Gewichtsreduzierung zu einem geringeren Verbrauch führt.

Wenigstens ein Profilkanal kann insbesondere fluiddicht ausgestaltet sein und sich im eingesetzten Zustand von der Montageöffnung des Tanks weg durch die Entnahmeeinheit erstrecken, vorzugsweise parallel zur Einführungsrichtung der Entnahmeeinheit in den Tank. Bei dieser Ausgestaltung kann der Profilkanal in einer Doppelfunktion die Entnahmeleitung bilden, durch welche der Tankinhalt nach außen gefördert wird. Vorzugsweise liegt die Eintrittsöffnung des Profilkanals, durch die der Tankinhalt an der der Montageöffnung entgegengesetzten Seite in die Entnahmeeinheit tritt, in der Nähe des Bodens des Tanks.

In einer weiteren Ausgestaltung können wenigstens zwei Profilkanäle Wärmetauscherkanäle bilden, durch die das Wärmetauscherfluid leitbar ist. Dabei kann beispielsweise ein Profilkanal einen Vorlaufkanal, durch den das Wärmetauscherfluid im Betrieb in die Entnahmeeinheit geleitet ist, und wenigstens ein Profilkanal einen Rücklaufkanal, durch den das Wärmetauscherfluid im Betrieb aus der Entnahmeeinheit geleitet ist, bilden. Durch die Wärmetauscherkanäle wird das gesamte Strangpressprofil mit allen integrierten Elementen schnell auf Betriebstemperatur gebracht.

Ferner kann in wenigstens einem Profilkanal wenigstens ein Teil einer Pegelmesseinrichtung angeordnet sein, durch welche ein für den Pegelstand im Tank repräsentatives Signal ausgebbar ist.

Der Wirkungsgrad des Wärmetauschers kann erhöht werden, wenn gemäß einer vorteilhaften Ausgestaltung das Strangpressprofil Wärmetauscherrippen aufweist, die vorzugsweise einstückig am Strangpressprofil ausgeformt sind. Vorzugsweise erstrecken sich die Wärmetauscherrippen von jeweils der Wand eines Profilkanals, durch den Wärmetauscherfluid geleitet ist, weg in das Tankinnere. Ferner können die Wärmetauscherrippen sich im Wesentlichen gebogen und/oder platten- oder segelförmig von jeweils der Wandung eines Profilkanals weg erstrecken. Die Wärmetauscherrippen können eine große Konvektionsfläche aufweisen, die mit ihrer Stirnfläche in das Tankinnere gerichtet ist, so dass die Senkrechte auf die Konvektionsfläche ins Tankinnere weist.

Damit der Tauchkörper durch die Montageöffnung in den Tank einsetzbar ist, kann die Außenkontur des Strangpressprofils in einem Querschnitt im Wesentlichen quer zur Einführrichtung in die Innenkontur der Montageöffnung vollständig einschreibbar ausgestaltet sein.

Im Folgenden wird die Erfindung anhand unterschiedlicher Ausführungsformen mit Bezug auf die Figuren beispielhaft erläutert. Dabei stellen die beschriebenen Ausführungsformen lediglich mögliche Ausgestaltungen dar, die für den jeweiligen Anwendungsfall modifiziert werden können. Einzelne, für sich vorteilhafte Merkmale können gemäß der obigen Beschreibung der vorteilhaften Ausgestaltungen bei der jeweils beschriebenen Ausführungsform hinzugefügt oder weggelassen werden.

Es zeigen:
- Fig. 1: eine erste schematische Perspektivansicht einer Ausführungsform der erfindungsgemäßen Entnahmeeinheit;
- Fig. 2: eine zweite schematische Perspektivansicht der Entnahmeeinheit der Fig. 1;
- Fig. 3: eine zweite Ausführungsform der erfindungsgemäßen Entnahmeeinheit in einer schematischen Perspektivansicht;
- Fig. 4: eine schematische Perspektivansicht eines Tauchkörpers aus einem Strangpressprofil.

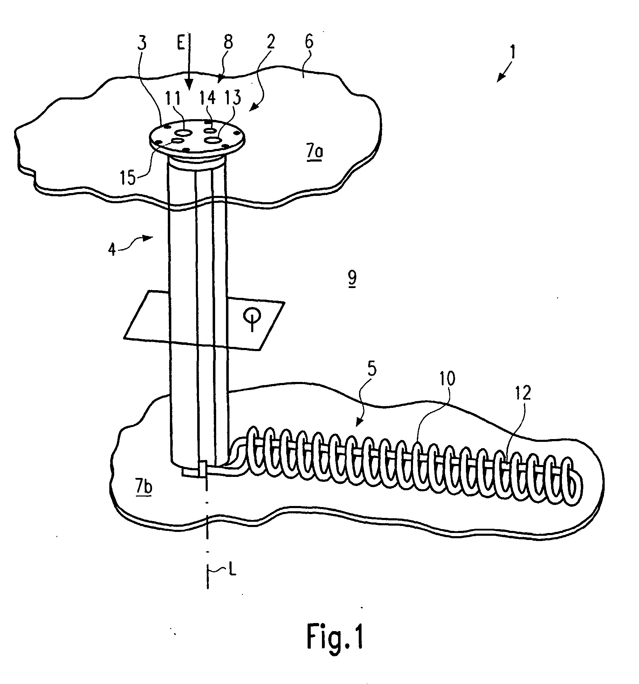

Zunächst wird mit Bezug auf die Fig. 1 der Aufbau einer Ausführungsform der erfindungsgemäßen Entnahmeeinheit 1 beschrieben.

Die Entnahmeeinheit 1 weist an ihrem einen, gewöhnlicherweise oberen, Ende 2 einen Flansch 3 auf, an dem ein meist länglicher Tauchkörper 4 angebracht ist. Ferner weist die Entnahmeeinheit 1 einen Wärmetauscherfortsatz 5 auf, der beispielsweise am unteren Ende des Tauchkörpers 4 angeordnet ist und sich von diesem weg erstreckt.

Im Betrieb ist die Entnahmeeinheit 1 entlang einer Einführrichtung E in einen Tank 6 eingesetzt, von dem in Fig. 1 schematisch lediglich eine obere Wand 7a und ein Boden 7b dargestellt sind.

In der oberen Wand 7a des Tanks 6 befindet sich eine Montageöffnung 8, die bei eingesetzter Entnahmeeinheit durch den Flansch 3 dicht verschlossen ist.

Der Tauchkörper 4 ragt vom Flansch 3 an der Montageöffnung 8 nach unten in Richtung der Bodenfläche 7 des Tanks und taucht in das Fluid ein, mit dem der Tank 6 befüllt ist. Der Tauchkörper 4 weist vorzugsweise die Form eines langgestreckten geometrischen Prismas auf, dessen Grundfläche in einer Ebene Q im Wesentlichen quer zur Einführrichtung E in die Innenkontur der Montageöffnung 8 vollständig einschreibbar ist, so dass der Entnahmekörper durch die vorzugsweise in Richtung seiner Längsachse weisende Einführrichtung E in das Tankinnere 9 einsetzbar ist.

Der Wärmetauscherfortsatz 5 erstreckt sich bei in den Tank eingesetzter Entnahmeeinheit 1 vom Tauchkörper 4 vorzugsweise in etwa parallel zum Boden 7b weg in das Tankinnere 9 und ist auslenkbar am Tauchkörper 4 gehalten. Insbesondere kann sich bei eingesetzter Entnahmeeinheit 1 der Wärmetauscherfortsatz 5 in Nähe des Bodens 7b oder auf dem Boden 7b befinden.

Der Wärmetauscherfortsatz 5 kann insbesondere aus einem flexiblen, spiral- oder schraubenförmig gewickelten Schlauch- oder Kabelmaterial 10 gebildet sein.

Bei der Ausführungsform der Fig. 1 wird durch einen Vorlaufkanal 11 im Tauchkörper 4 ein Wärmetauscherfluid in den Tauchkörper 4 und durch den Wärmetauscherfortsatz 5 geleitet, der zu diesem Zweck aus einem Schlauch gebildet ist. Im Rücklauf wird das Wärmetauscherfluid durch einen im Wesentlichen gerade durch die Schraubenwicklung des Wärmetauscherfortsatzes 5 geführten Schlauchabschnitt 12 durch den Tauchkörper 4 in einem Rücklaufkanal 13 zurück zum Flansch 3 geführt. Als Wärmetauscherfluid kann beispielsweise das Kühlwasser einer Verbrennungskraftmaschine verwendet werden. Hierzu können die Vorlaufleitung 11 und die Rücklaufleitung 13 an den Kühlkreislauf der Verbrennungskraftmaschine angeschlossen sein.

Alternativ oder zusätzlich zum Kreislauf des Wärmetauscherfluids kann auch eine Elektroheizung vorgesehen sein. In diesem Fall kann die Wendel 10 auch aus flexiblem, formstabilen Heizdraht gefertigt sein. Die Energieversorgung der zusätzlichen Elektroheizung kann beispielsweise über eine entsprechende Öffnung 14 im Flansch 3 erfolgen.

Im Tauchkörper 4 ist ferner eine Entnahmeleitung 15 vorgesehen, durch welche das Fluid aus dem Tankinneren 9 abgeleitet werden kann. Schließlich kann in der Entnahmeeinheit 1 eine Pegelmesseinrichtung (nicht gezeigt) integriert sein, durch welche ein für den Füllstand des Tanks repräsentatives Signal ausgebbar ist. Der Pegel im Tank kann über einen Schwimmer oder über Reedkontakte ermittelt werden.

Auf den Flansch 3 kann eine Steuereinheit angeordnet sein, durch welche die Funktionen der Entnahmeeinheit 1 gesteuert werden. In Fig. 1 ist die Steuereinheit weggelassen, um den Blick auf den Flansch freizugeben.

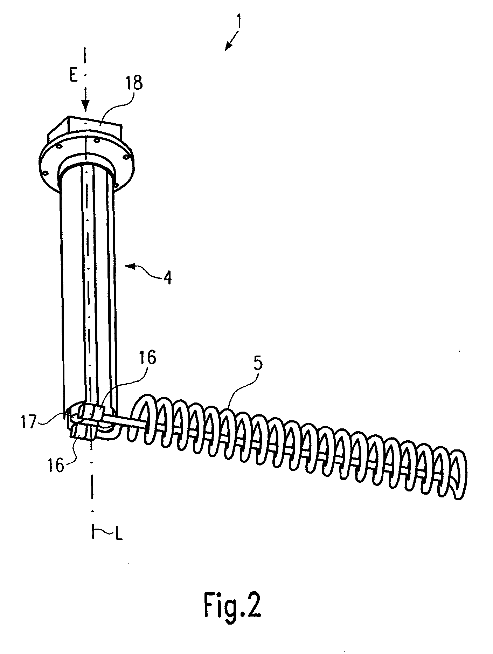

Aus der schematischen Perspektivansicht der Fig. 2, welche die Ausführungsform der Fig. 1 in einer Unteransicht darstellt, geht die Befestigung des Wärmetauscherfortsatzes 5 am bodennahen Ende des Tauchkörpers 4 hervor. Die Tankwände 7a, 7b sind in Fig. 2 der Übersichtlichkeit halber weggelassen. Wie zu erkennen ist, ist der Wärmetauscherfortsatz 5 über Zwischenstücke 16 beispielsweise in Form von Rohrwinkeln am Tauchkörper 4 befestigt, so dass sie im eingesetzten Zustand die Längsrichtung der Wärmetauscherwendel 12 im Wesentlichen senkrecht zur Entnahmerichtung E verläuft. Die Rohrwinkel 16 können als handelsübliche Schnellverbinder ausgestaltet sein, um im Fertigungsprozess den Wärmetauscherfortsatz 5 schnell montieren zu können. Am Tauchkörper 4 und am Wärmetauscherfortsatz sind in diesem Fall entsprechende Aufnahmen für die Schnellverbinder vorgesehen.

Wie in Fig. 2 ebenfalls zu erkennen ist, ist am unteren Ende, im Bodenbereich des Tanks, eine Eintrittsöffnung 17 für das Fluid aus dem Tank vorgesehen. Durch die Eintrittsöffnung 17 wird das Fluid in die Entnahmeleitung 15 gesaugt.

Im Folgenden werden die Montage und die Funktion der Entnahmeeinheit 1 der Fig. 1 beschrieben.

Zur Montage wird der Wärmetauscherfortsatz 5 vor dem Tauchkörper 4 durch die Montageöffnung 8 in den Tank 1 entlang der Einführrichtung E eingesetzt. Hierzu ist in einer Ebene Q im Wesentlichen quer zur Einführrichtung E die Außenkontur des Wärmetauscherfortsatzes 5 in die Innenkontur der Montageöffnung 8 einschreibbar. Die Einführrichtung E bestimmt sich dabei danach, in welcher Richtung die Querschnittskontur am kleinsten ist und die Entnahmeeinheit folglich am einfachsten in die Kontur der Montageöffnung zu schieben ist.

Aufgrund der Flexibilität des Wärmetauscherfortsatzes 5 kann dieser bei der Montage der Entnahmeeinheit zusammengedrückt werden, was das Einsetzen in die Montageöffnung 8 nochmals erleichtert. Ferner kann die Entnahmeeinheit 1 aufgrund der auslenkbaren Anbringung des Wärmetauscherfortsatzes 5 am Tauchkörper auch bei beengten Platzverhältnissen aus dem Tank ausgebaut und in den Tank eingebaut werden.
Sobald der Wärmetauscherfortsatz 5 durch die Montageöffnung 8 in das Tankinnere 9 eingetreten ist, richtet sich der Wärmetauscherfortsatz 5 aufgrund seiner elastischen Rückstellkraft aus der Montageposition vom Tauchkörper 4 weg in das Tankinnere 9 aus. Ein geringer Durchhang aufgrund seines Eigengewichts ist bei der Montage unschädlich, da der Wärmetauscherfortsatz 5 beim weiteren Einsetzen entlang des Bodens 7 des Tanks vom Tauchkörper 4 wegrutscht und bei gefülltem Tank aufschwimmt.

Die Betriebsstellung kann in einer modifizierten Ausgestaltung vom Wärmetauscherfortsatz 5 auch erst bei Inbetriebnahme eingenommen werden. Beispielsweise kann ein unter Druck stehendes, in dem Wärmetauscherfortsatz 5 gepumptes Wärmetauscherfluid den Wärmetauscherfortsatz aufgrund des Überdruckes entfalten und aufblähen und ihn gegen die Rückstellkraft vom Tauchkörper 4 wegstrecken.

Wenn bei vollständig eingesetzter Entnahmeeinheit 1 der Flansch 3 am Rand der Montageöffnung 8 aufliegt, wird die Entnahmeeinheit fluiddicht an dem Tank 6 befestigt, so dass das Tankinnere kontrolliert nur noch durch die Öffnungen im Flansch entweichen kann. Zum Abdichten des Flansches 3 gegenüber dem Tank 6 können an der Entnahmeeinheit 1 Dichtelemente vorgesehen sein.

Anschließend wird die Vorlauföffnung 11 und die Rücklauföffnung 13 mit einem Wärmetauscherfluidkreislauf verbunden. Die Entnahmeöffnung 15 wird mit einer Leitung verbunden, durch welche das Fluid aus dem Tank 6 zu seinem Verwendungsort, beispielsweise einer SINOX-Abgasreinigungsanlage, geleitet wird. Schließlich werden die Pegelmesseinrichtung und gegebenenfalls die zusätzliche Elektroheizung angeschlossen.

In der Entnahmeeinheit 1 kann eine Steuereinheit 18 integriert sein, wie in Fig. 2 angedeutet ist. Die Steuereinheit 18 kann insbesondere eine Temperatureinstelleinrichtung aufweisen, durch die der Heizzustand der Entnahmeeinheit gesteuert werden kann. So kann beispielsweise bei einem Unterschreiten einer Grenztemperatur warmes Wärmetauscherfluid durch die Entnahmeeinheit geleitet werden, um den Tankinhalt zu wärmen. Durch diese Maßnahme kann ein Ausfällen von Bestandteilen des Fluids sowie ein Gefrieren des Fluids im Tankinneren 9 verhindert werden. Um ein Sieden oder Zersetzen des Fluids im Tankinneren 9 zu vermeiden, kann die Temperatureinstelleinrichtung ein Überschreiten einer Grenztemperatur kühleres Wärmetauscherfluid durch die Entnahmeeinheit 1 leiten, um den Tankinhalt zu kühlen. Die Steuereinheit 18 kann hiermit mit Umschaltventilen und einem elektronischen Prozessor versehen sein.

Die Steuereinheit 18 kann ferner mit einer Dosiereinheit (nicht gezeigt) versehen sein, durch welche die pro Zeiteinheit entnommene Menge an Fluid aus dem Tank überwacht und eingestellt werden kann.

Wie in Fig. 1 zu erkennen ist, erstreckt sich die Wärmetauscherwendel des Wärmetauscherfortsatzes in der Nähe des Bodens 7 des Tanks bzw. liegt sogar auf dem Boden 7 auf. Diese Anordnung führt dazu, dass beim Beheizen des Wärmetauscherfortsatzes 5 das in seiner Umgebung erwärmte, bodennahe Fluid aufsteigt und eine den Tankinhalt beschleunigt aufwärmende Konvektionsströmung entsteht.

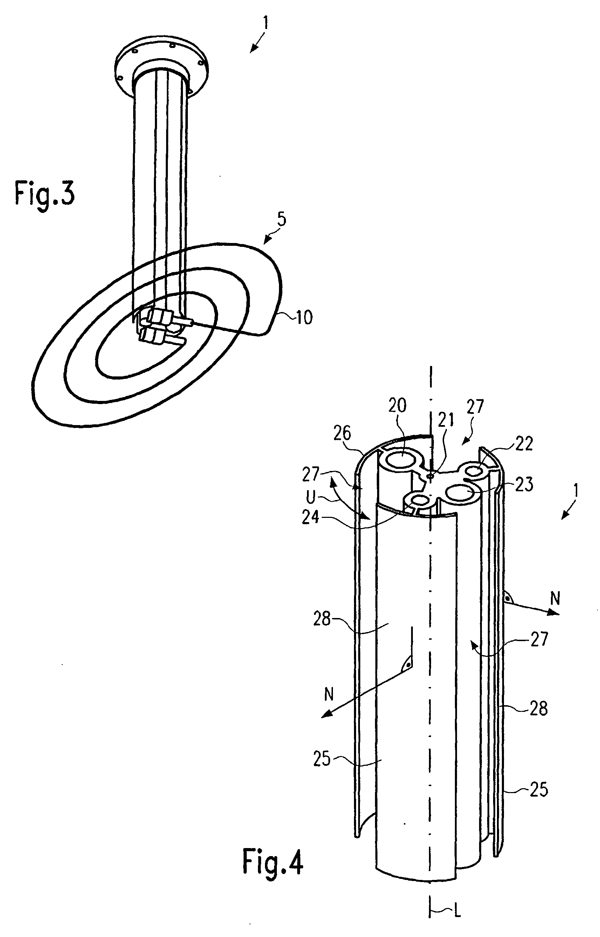

Fig. 3 zeigt eine weitere Ausführungsform einer erfindungsgemäßen Entnahmeeinheit 1. Bei der Ausführungsform der Fig. 3 werden für hinsichtlich ihrer Funktion und ihres Aufbaus ähnliche oder gleiche Elemente dieselben Bezugszeichen wie bei der Ausführungsform der Fig. 1 und 2 verwendet.

Die Ausführungsform der Fig. 3 unterscheidet sich von der Ausführungsform der Fig. 1 und 2 lediglich in der Ausgestaltung des Wärmetauscherfortsatzes 5 der als eine Wärmetauscherspirale ausgestaltet ist, die sich um den unteren Bereich des Tauchkörpers 4 parallel zum Tankboden 7b (vgl. Fig. 1) flächig ausbreitet. Der Wärmetauscherfortsatz 5 ist aus einem elastisch auslenkbaren Kabel- oder Schlauchmaterial 10 gefertigt und kann beim Einsetzen durch die Montageöffnung 8 (vgl. Fig. 1) so verformt werden, dass er durch die im Vergleich zu seiner Abmessungen wesentlich kleinere Montageöffnung 8 passt. Im Tankinneren breitet sich der Wärmetauscherfortsatz 5 aufgrund seiner Eigenelastizität selbsttätig wieder aus.

Fig. 4 zeigt eine Ausführungsform des Tauchkörpers 4, wie er bei den Entnahmeeinheiten der Fig. 1 bis 3 verwendet werden kann. Der Tauchkörper 4 ist einstückig aus einem Strangpressprofil gefertigt, vorzugsweise aus einem Metall wie Aluminium oder einem korosionsbeständigen Werkstoff wie Edelstahl. In dem Strangpressprofil sind Profilkanäle 20, 21, 22, 23 und 24 ausgebildet. Die Profilkanäle 20 bis 24 erstrecken sich in Längsrichtung L durch den Tauchkörper 4. Im eingesetzten Zustand münden die jeweils oberen Öffnungen der Profilkanäle am Flansch 3 und erlauben den Anschluss von weiteren Vorrichtungen außerhalb des Tanks, wie beispielsweise Ventile, Dosierpumpen, Pumpen oder Schalter.

Der Profilkanal 20 dient als Entnahmeleitung 15, durch die das Fluid aus dem Tank geleitet wird. Der Profilkanal 20 weist an seinem unteren Ende die Eintrittsöffnung 17 auf. Die Eintrittsöffnung 17 befindet sich möglichst nahe am Boden 7 des Tanks, um ein vollständiges Entleeren des Tanks zu ermöglichen.

Ein Paar von Profilkanälen 22, 24 dient zur Durchleitung eines Wärmetauscherfluids durch den Tauchkörper 4. An der im eingesetzten Zustand in der Nähe des Tankbodens liegenden Öffnung dieser Profilkanäle kann der Wärmetauscherfortsatz 5 fluidleitend angeschlossen sein, so dass das Wärmetauscherfluid durch die Profilkanäle 22, 24 und den Wärmetauscherfortsatz 5 zirkuliert.

In einem weiteren Profilkanal 23 ist die Pegelmesseinrichtung angeordnet. Der Profilkanal 23 steht im eingesetzten Zustand in Verbindung mit dem Tankinneren 9, so dass er entsprechend der Pegelhöhe des Fluids im Tank 6 mit dem Fluid gefüllt ist. Über einen Schwimmer oder Reedkontakte kann ein für den Pegel im Tank repräsentatives Signal an die Steuereinheit 18 oder andere Auswertegeräte ausgegeben werden.

Schließlich kann das für den Tauchkörper 4 verwendete Strangpressprofil einen Profilkanal 21 aufweisen, in dem eine zusätzliche Elektroheizung eingeführt werden kann.

Sämtliche Profilkanäle 20 bis 24 sind in Richtung quer zur Längsrichtung vollständig ummantelt, so dass sie ohne maschinelle Nachbearbeitung als Fluidleitungen verwendet werden können.

Die Form des Strangpressprofils setzt sich im Querschnitt im Wesentlichen aus den miteinander verbunden Wandungen der Profilkanäle zusammen, so dass es ein nur geringes Gewicht aufweist.

An den Profilkanälen 20 bis 24, durch die im eingebauten Zustand das Wärmetauscherfluid geleitet ist, sind Wärmetauscherrippen 25 angeformt, deren Außenkontur im Wesentlichen der Außenkontur der Montageöffnung entspricht. Eine weitere Wärmetauscherrippe 26 kann an einem weiteren Profilkanal 20, 21, 23, vorzugsweise der Entnahmeöffnung, angeformt werden. Die Kühlrippen sind in Umfangsrichtung U des Tauchkörpers 4 durch Spalte 27 jeweils voneinander getrennt, so dass das Fluid des Tanks in unmittelbare Berührung mit der Wandung der Profilkanäle treten kann, insbesondere der Wärmetauscherkanäle 22, 24. Die Wärmetauscherrippen 25, 26 werden vorzugsweise im Zuge des Strangpressens mitgeformt. Sie können jedoch auch nachträglich am Strangpressprofil angebracht sein. Die im Vergleich zu den übrigen Flächen großen Konvektionsflächen 28 der Wärmetauscherrippen 25, 26 sind in das Tankinnere 9 gerichtet, um möglichst viel Wärmestrahlung in das Tankinnere abzugeben. Hierzu weist vorzugsweise die Senkrechte auf die Konvektionsflächen 28 in das Tankinnere 9.

Die dargestellte Entnahmeeinheit 1 ist insbesondere für Tanks geeignet, in denen eine wässrige Harnstofflösung zur Beimengung zu den Abgasen einer Verbrennungskraftmaschine, beispielsweise bei der SINOX-Abgasreinigung in Dieselfahrzeugen, transportiert wird. Durch die Beimengung von wässriger Harnstofflösung zu den Abgasen verringert sich der Anteil von Stickoxiden.

Die tatsächliche Ausgestaltung der Entnahmeeinheit, wie bereits erläutert, ist nicht identisch an die oben beschriebenen Ausführungsformen gebunden .

So kann der Wärmetauscherfortsatz 5 auch eine andere Form als eine Wendelform oder eine Spiralform aufweisen, beispielsweise eine Mäander. Ferner ist die Anzahl der Profilkanäle im Strangpressprofil weitgehend beliebig, wobei es jedoch von Vorteil ist, wenn wenigstens die Entnahmeleitung 20 und die Wärmetauscherkanäle 22, 24 vorhanden sind.

Des Weiteren kann der Wärmetauscherfortsatz auch mit Tauchkörpern 4 verwendet werden, bei denen der Wärmetauscher und/oder die Entnahmeleitung aus Rohren aufgebaut sind.

## Patentansprüche

1. Entnahmeeinheit (1) zur Entnahme eines Fluids aus einem Tank (6), die durch eine Montageöffnung (8) in den Tank (6) insbesondere für ein ausfällendes und/oder gefrierendes Fluid einteilig einsetzbar ausgestaltet ist, mit einem Tauchkörper (4), der mit einer Entnahmeleitung (20) und mit einem Wärmetauscher (22, 23) versehen ist, und mit einem Wärmetauscherfortsatz (5), der sich im eingesetzten Zustand der Entnahmeeinheit (1) vom Tauchkörper (4) weg in das Tankinnere (9) erstreckt, **dadurch gekennzeichnet, dass** der Wärmetauscherfortsatz (5) auslenkbar ausgestaltet ist.

2. Entnahmeeinheit (1) nach Anspruch 1, **dadurch gekennzeichnet, dass** der Wärmetauscherfortsatz (5) elastisch gegen eine Rückstellkraft auslenkbar am Tauchkörper (4) gehalten ist.

3. Entnahmeeinheit (1) nach Anspruch 1 oder 2, **dadurch gekennzeichnet, dass** der Wärmetauscherfortsatz (5) in einer Montagestellung, in der er durch die Montageöffnung in den Tank (6) einführbar ist, gegenüber der eingesetzten Stellung elastisch ausgelenkt ist.

4. Entnahmeeinheit (1) nach einem der oben genannten Ansprüche, **dadurch gekennzeichnet, dass** in der Montagestellung der Wärmetauscherfortsatz (5) in einer Ebene Q im Wesentlichen quer zur Einführrichtung E der Entnahmeeinheit in dem Tank (6) einen Querschnitt mit einer Außenkontur aufweist, die in die Innenkontur der Montageöffnung einschreibbar ist.

5. Entnahmeeinheit (1) nach einem der oben genannten Ansprüche, **dadurch gekennzeichnet, dass** der Wärmetauscher Wärmetauscherkanäle (22, 24) umfasst, durch die ein Wärmetauscherfluid zirkulierend leitbar ist.

6. Entnahmeeinheit (1) nach Anspruch 5, **dadurch gekennzeichnet, dass** der Wärmetauscherfortsatz (5) an die Wärmetauscherkanäle (22, 24) fluidleitend angeschlossen ist.

7. Entnahmeeinheit (1) nach Anspruch 6, **dadurch gekennzeichnet, dass** der Kreislauf des Wärmetauscherfluids durch die Entnahmeeinheit (1) hindurch durch den Wärmetauscherfortsatz (5) geschlossen ist.

8. Entnahmeeinheit (1) nach einem der oben genannten Ansprüche, **dadurch gekennzeichnet, dass** der Wärmetauscherfortsatz (5) einen Schlauch (10) umfasst.

9. Entnahmeeinheit (1) nach einem der oben genannten Ansprüche, **dadurch gekennzeichnet, dass** der Wärmetauscherfortsatz (5) wendelförmig oder spiralförmig gewickelt ausgestaltet ist.

10. Entnahmeeinheit (1) nach einem der oben genannten Ansprüche, **dadurch gekennzeichnet, dass** eine Temperatureinstelleinrichtung (18) integriert ist, durch welche bei einem Unterschreiten einer Grenztemperatur die Entnahmeeinheit (1) im Wesentlichen automatisch als Heizeinrichtung betätigbar ist.

11. Entnahmeeinheit (1) nach einem der oben genannten Ansprüche, **dadurch gekennzeichnet, dass** eine Temperatureinstelleinrichtung (18) vorgesehen ist, durch welche bei einem Überschreiten einer Grenztemperatur die Entnahmeeinheit (1) im Wesentlichen automatisch als Kühleinrichtung betätigbar ist.

12. Entnahmeeinheit (1) nach einem der oben genannten Ansprüche, **dadurch gekennzeichnet, dass** eine Pegelmesseinrichtung in die Entnahmeeinheit (1) integriert ist, wobei durch die Pegelmesseinrichtung ein für den Fluidpegel in dem Tank (6) repräsentatives Signal ausgebbar ist.

13. Entnahmeeinheit (1) nach einem der oben genannten Ansprüche, **dadurch gekennzeichnet, dass** der Tauchkörper (4) aus einem Strangpressprofil gebildet ist.

14. Entnahmeeinheit (1) nach Anspruch 13, **dadurch gekennzeichnet, dass** das Strangpressprofil wenigstens einen Profilkanal (20, 21, 22, 23, 24) ausbildet.

15. Entnahmeeinheit (1) nach Anspruch 13 oder 14, **dadurch gekennzeichnet, dass** wenigstens ein Profilkanal (20) die Entnahmeleitung (15) bildet.

16. Entnahmeeinheit (1) nach einem der Ansprüche 13 bis 15, **dadurch gekennzeichnet, dass** wenigstens zwei Profilkanäle (22, 24) Wärmetauscherkanäle bilden, durch die ein Wärmetauscherfluid leitbar ist.

17. Entnahmeeinheit (1) nach Anspruch 16, **dadurch gekennzeichnet, dass** wenigstens ein Profilkanal (22) einen Vorlaufkanal und wenigstens ein Profilkanal (24) einen Rücklaufkanal für das Wärmetauscherfluid bildet.

18. Entnahmeeinheit (1) nach einem der Ansprüche 14 bis 16, **dadurch gekennzeichnet, dass** in wenigstens einem Profilkanal (20, 21, 22, 23, 24) wenigstens ein Teil der Pegelmesseinrichtung angeordnet ist.

19. Entnahmeeinheit (1) nach einem der Ansprüche 13 bis 18, **dadurch gekennzeichnet, dass** das Strangpressprofil wenigstens eine Wärmetauscherrippe (25, 26) aufweist.

20. Entnahmeeinheit (1) nach Anspruch 19, **dadurch gekennzeichnet, dass** die wenigstens eine Wärmetauscherrippe (25, 26) sich von der Wandung wenigstens eines Profilkanals weg in das Tankinnere (9) erstreckt.

21. Entnahmeeinheit (1) nach Anspruch 19 oder 20, **dadurch gekennzeichnet, dass** die Wärmetauscherrippe (25, 26) im Wesentlichen plattenförmig ausgestaltet ist.

22. Entnahmeeinheit (1) nach einem der Ansprüche 19 bis 21, **dadurch gekennzeichnet, dass** eine gegenüber den übrigen Flächen der Wärmetauscherrippe große Konvektionsfläche (28) der Wärmetauscherrippe (25, 26) in das Tankinnere (9) gerichtet ist.

23. Entnahmeeinheit (1) nach einem der Ansprüche 13 bis 21, **dadurch gekennzeichnet, dass** die Außenkontur des Strangpressprofils in einem Querschnitt im Wesentlichen quer zur Einführrichtung E in die Innenkontur der Montageöffnung einschreibbar ausgestaltet ist.

24. Entnahmeeinheit (1) nach einem der oben genannten Ansprüche, **dadurch gekennzeichnet, dass** eine zusätzliche Heizung zum Wärmetauscher (22, 23) vorgesehen ist.

25. Entnahmeeinheit (1) nach einem der oben genannten Ansprüche, **dadurch gekennzeichnet, dass** der Tauchkörper (4) aus einem korosionsbeständigen Werkstoff gefertigt ist.

26. Entnahmeeinheit (1) nach einem der oben genannten Ansprüche, **dadurch gekennzeichnet, dass** der Wärmetauscher (22, 23) und/oder die Entnahmeleitung (20) aus Rohren aufgebaut sind.

## Claims

1. Extraction unit (1) for extracting a fluid from a tank (6), which is configured to be inserted in one piece into the tank (6) in particular for a precipitating and/or freezing liquid through an assembly aperture (8), comprising an immersion body (4), which is provided with an extraction line (20) and with a heat exchanger (22, 23), and comprising a heat exchanger extension (5), which in the inserted state of the extraction unit (1) extends away from the immersion body (4) into the tank interior (9), **characterised in that** the heat exchanger extension (5) is configured to deflect.

2. Extraction unit (1) according to claim 1, **characterised in that** the heat exchanger extension (5) is held elastically deflectable on the immersion body (4) against a restoring force.

3. Extraction unit (1) according to claim 1 or 2, **characterised in that** the heat exchanger extension (5) is resiliently deflected from the inserted position in an assembly position in which it is insertable into the tank (6) through the assembly aperture.

4. Extraction unit (1) according to one of the above-mentioned claims, **characterised in that** in the assembly position, in a plane Q substantially transverse to the insertion direction E of the extraction unit in the tank (6), the heat exchanger extension (5) has a cross-section with an outer contour which may be inscribed into the inner contour of the assembly aperture.

5. Extraction unit (1) according to one of the above-mentioned claims, **characterised in that** the heat exchanger comprises heat exchanger channels (22, 24) through which a heat exchanger fluid may be conducted in a circulating manner.

6. Extraction unit (1) according to claim 5, **characterised in that** the heat exchanger extension (5) is connected with fluid conduction to the heat exchanger channels (22, 24).

7. Extraction unit (1) according to claim 6, **characterised in that** the circuit of the heat exchanger fluid through the extraction unit (1) is completed by the heat exchanger extension (5).

8. Extraction unit (1) according to one of the above-mentioned claims, **characterised in that** the heat exchanger extension (5) comprises a hose (10).

9. Extraction unit (1) according to one of the above-mentioned claims, **characterised in that** the heat exchanger extension (5) is configured wound in a helical or spiral shape.

10. Extraction unit (1) according to one of the above-mentioned claims, **characterised in that** a temperature adjusting device (18) is incorporated, by means of which, if the temperature falls below a limit temperature, the extraction unit (1) is substantially automatically actuatable as a heating device.

11. Extraction unit (1) according to one of the above-mentioned claims, **characterised in that** a temperature adjusting device (18) is provided, by means of which if a limit temperature is exceeded the extraction unit (1) is substantially automatically actuatable as a cooling device.

12. Extraction unit (1) according to one of the above-mentioned claims, **characterised in that** a level measuring device is incorporated into the extraction unit (1), whereby the level measuring device may transmit a signal representing the fluid level in the tank (6).

13. Extraction unit (1) according to one of the above-mentioned claims, **characterised in that** the immersion body (4) is formed as an extruded profile.

14. Extraction unit (1) according to claim 13, **characterised in that** the extruded profile forms at least one profile channel (20, 21, 22, 23, 24).

15. Extraction unit (1) according to claim 13 or 14, **characterised in that** at least one profile channel (20) forms the extraction line (15).

16. Extraction unit (1) according to one of claims 13 to 15, **characterised in that** at least two profile channels (22, 24) form heat exchanger channels, through which a heat exchanger fluid may be passed.

17. Extraction unit (1) according to claim 16, **characterised in that** at least one profile channel (22) forms a feed channel and at least one profile channel (24) forms a return channel for the heat exchanger fluid.

18. Extraction unit (1) according to one of claims 14 to 16, **characterised in that** at least part of the level measuring device is disposed in at least one profile channel (20, 21, 22, 23, 24).

19. Extraction unit (1) according to one of claims 13 to 18, **characterised in that** the extruded profile has at least one heat exchanger fin (25, 26).

20. Extraction unit (1) according to claim 19, **characterised in that** the at least one heat exchanger fin (25, 26) extends away from the wall of at least one profile channel into the tank interior (9).

21. Extraction unit (1) according to claim 19 or 20, **characterised in that** the heat exchanger fin (25, 26) is substantially plate-shaped.

22. Extraction unit (1) according to one of claims 19 to 21, **characterised in that** a large convection surface (28) of the heat exchanger fin (25, 26) compared to the remaining surfaces of the heat exchanger fin is oriented into the tank interior (9).

23. Extraction unit (1) according to one of claims 13 to 21, **characterised in that** the outer contour of the extruded profile is configured in a cross-section substantially transverse to the insertion direction E so as to be inscribable into the inner contour of the assembly aperture.

24. Extraction unit (1) according to one of the above-mentioned claims, **characterised in that** an additional heater is provided for the heat exchanger (22, 23).

25. Extraction unit (1) according to one of the above-mentioned claims, **characterised in that** the immersion body (4) is manufactured from a corrosion-resistant material.

26. Extraction unit (1) according to one of the above-mentioned claims, **characterised in that** the heat exchanger (22, 23) and/or the extraction line (20) are constructed from tubes.

## Revendications

1. Unité de prélèvement (1) servant à prélever un fluide hors d'un réservoir (6), laquelle est agencée de manière à pouvoir être insérée d'une seule pièce, en passant par un orifice de montage (8), dans le réservoir (6), notamment un réservoir pour fluide qui se décompose et/ou qui gèle, laquelle comporte un corps plongeur (4), qui est pourvu d'un conduit de prélèvement (20) et d'un échangeur de chaleur (22, 23), ainsi qu'un prolongement d'échangeur de chaleur (5) qui, lorsque l'unité de prélèvement (1) est dans son état inséré, s'étend du corps plongeur (4) vers l'intérieur de réservoir (9), **caractérisée en ce que** le prolongement d'échangeur de chaleur (5) est agencé de manière à pouvoir être dévié.

2. Unité de prélèvement (1) selon la revendication 1, **caractérisée en ce que** le prolongement d'échangeur de chaleur (5) est maintenu élastiquement, à l'encontre d'une force de rappel, de manière déviable sur le corps plongeur (4).

3. Unité de prélèvement (1) selon la revendication 1 ou 2, **caractérisée en ce que**, dans une position de montage dans laquelle il peut être introduit dans le réservoir (6) par l'orifice de montage, le prolongement d'échangeur de chaleur (5) est dévié élastiquement par rapport à la position insérée.

4. Unité de prélèvement (1) selon l'une des revendications mentionnées ci-dessus, **caractérisée en ce que,** dans la position de montage, le prolongement d'échangeur de chaleur (5) présente, dans un plan Q sensiblement transversal à la direction d'introduction E de l'unité de prélèvement dans le réservoir (6), une section ayant un contour extérieur qui peut s'inscrire dans le contour intérieur de l'orifice de montage.

5. Unité de prélèvement (1) selon l'une des revendications mentionnées ci-dessus, **caractérisée en ce que** l'échangeur de chaleur comprend des canaux d'échangeur de chaleur (22, 24) par lesquels un fluide échangeur de chaleur peut être conduit de manière circulante.

6. Unité de prélèvement (1) selon la revendication 5, **caractérisée en ce que** le prolongement d'échangeur de chaleur (5) est raccordé, de manière à conduire un fluide, aux canaux d'échangeur de chaleur (22, 24).

7. Unité de prélèvement (1) selon la revendication 6, **caractérisée en ce que** le circuit du fluide échangeur de chaleur à travers l'unité de prélèvement (1) est fermé par le prolongement d'échangeur de chaleur (5).

8. Unité de prélèvement (1) selon l'une des revendications mentionnées ci-dessus, **caractérisée en ce que** le prolongement d'échangeur de chaleur (5) comprend un tube (10).

9. Unité de prélèvement (1) selon l'une des revendications mentionnées ci-dessus, **caractérisée en ce que** le prolongement d'échangeur de chaleur (5) est agencé d'une manière enroulée en hélice ou en spirale.

10. Unité de prélèvement (1) selon l'une des revendications mentionnées ci-dessus, **caractérisée en ce qu'**un dispositif de réglage de température (18) est intégré grâce auquel l'unité de prélèvement (1) peut être actionnée sensiblement automatiquement en tant que dispositif de chauffage lors du franchissement à la baisse d'une température limite.

11. Unité de prélèvement (1) selon l'une des revendications mentionnées ci-dessus, **caractérisée en ce qu'**un dispositif de réglage de température (18) est prévu grâce auquel l'unité de prélèvement (1) peut être actionnée pour l'essentiel automatiquement en tant que dispositif de réfrigération lors du dépassement d'une température limite.

12. Unité de prélèvement (1) selon l'une des revendications mentionnées ci-dessus, **caractérisée en ce qu'**un dispositif de mesure de niveau est intégré dans l'unité de prélèvement (1), un signal représentatif du niveau de fluide dans le réservoir (6) pouvant être délivré par le dispositif de mesure de niveau.

13. Unité de prélèvement (1) selon l'une des revendications mentionnées ci-dessus, **caractérisée en ce que** le corps plongeur (4) est constitué d'un profilé filé.

14. Unité de prélèvement (1) selon la revendication 13, **caractérisée en ce que** le profilé filé forme au moins un canal de profilé (20, 21, 22, 23, 24).

15. Unité de prélèvement (1) selon la revendication 13 ou 14, **caractérisée en ce qu'**au moins un canal de profilé (20) constitue le conduit de prélèvement (15).

16. Unité de prélèvement (1) selon l'une des revendications 13 à 15, **caractérisée en ce qu'**au moins deux canaux de profilé (22, 24) constituent des canaux d'échangeur de chaleur par lesquels il est possible de conduire un fluide échangeur de chaleur.

17. Unité de prélèvement (1) selon la revendication 16, **caractérisée en ce qu'**au moins un canal de profilé (22) constitue un canal d'aller et au moins un canal de profilé (24) constitue un canal de retour destinés au fluide échangeur de chaleur.

18. Unité de prélèvement (1) selon l'une des revendications 14 à 16, **caractérisée en ce qu'**au moins une partie du dispositif de mesure de niveau est disposée dans au moins un canal de profilé (20, 21, 22, 23, 24).

19. Unité de prélèvement (1) selon l'une des revendications 13 à 18, **caractérisée en ce que** le profilé filé comporte au moins une ailette d'échangeur de chaleur (25, 26).

20. Unité de prélèvement (1) selon la revendication 19, **caractérisée en ce qu'**au moins une ailette d'échangeur de chaleur (25, 26) s'étend de la paroi d'au moins un canal de profilé vers l'intérieur de réservoir (9).

21. Unité de prélèvement (1) selon la revendication 19 ou 20, **caractérisée en ce que** l'ailette d'échangeur de chaleur (25, 26) est sensiblement agencée en forme de plaque.

22. Unité de prélèvement (1) selon l'une des revendications 19 à 21, **caractérisée en ce qu'**une surface de convection (28) de l'ailette d'échangeur de chaleur (25, 26), dont la taille est grande par rapport aux autres surfaces de l'ailette d'échangeur de chaleur, est dirigée vers l'intérieur de réservoir (9).

23. Unité de prélèvement (1) selon l'une des revendications 13 à 21, **caractérisée en ce que,** dans une section sensiblement transversale à la direction d'introduction E, le contour extérieur du profilé filé est agencé de manière à pouvoir s'inscrire dans le contour intérieur de l'orifice de montage.

24. Unité de prélèvement (1) selon l'une des revendications mentionnées ci-dessus, **caractérisée en ce qu'**il est prévu un chauffage supplémentaire en plus de l'échangeur de chaleur (22, 23).

25. Unité de prélèvement (1) selon l'une des revendications mentionnées ci-dessus, **caractérisée en ce que** le corps plongeur (4) est fait d'un matériau résistant à la corrosion.

26. Unité de prélèvement (1) selon l'une des revendications mentionnées ci-dessus, **caractérisée en ce que** l'échangeur de chaleur (22, 23) et/ou le conduit de prélèvement (20) sont construits à partir de tubes.
